# EUROPEAN PATENT SPECIFICATION

(11) **EP 2 421 079 B1**
(45) Date of publication and mention of the grant of the patent: **24.06.2015**
(21) Application number: 10764188.8
(22) Date of filing: 18.02.2010
(51) Int. Cl.: H01M 8/04, C01B 3/34, H01M 8/06

(54) **FUEL CELL POWER GENERATION SYSTEM**
BRENNSTOFFZELLENERZEUGUNGSSYSTEM
SYSTÈME DE GÉNÉRATION DE PUISSANCE PAR PILE À COMBUSTIBLE

(30) Priority: 13.04.2009 JP 2009096860
(43) Date of publication of application: 22.02.2012
(73) Proprietor: Panasonic Intellectual Property Management Co., Ltd., Osaka 540-6207 (JP)
(72) Inventor: SANO, Hideharu, Chuo-ku, Osaka-shi, Osaka 540-6207 (JP); TAGUCHI, Kiyoshi, Chuo-ku, Osaka-shi, Osaka 540-6207 (JP)
(74) Representative: Grünecker Patent- und Rechtsanwälte PartG mbB
(86) International application number: PCT/JP2010/001066
(87) International publication number: WO 2010/119601

(56) References cited:
- WO-A1-2006/106404
- JP-A- 6 049 469
- JP-A- 2005 268 043
- JP-A- 2006 260 874
- JP-A- 2007 084 621
- JP-A- 2008 258 023
- JP-A- 2009 023 869
- US-A1- 2003 064 259

## Description

### Technical Field

The present invention relates to a body structure of a fuel cell power generation system configured to generate electric power by use of a fuel cell.

### Background Art

There is a fuel cell power generation system disclosed in Patent Document 1 as a related art fuel cell power generation system. The related art fuel cell power generation system disclosed in Patent Document 1 is described by reference to Fig. 8. Fig. 8 shows a configuration of the related art fuel cell power generation system disclosed in Patent Document 1.

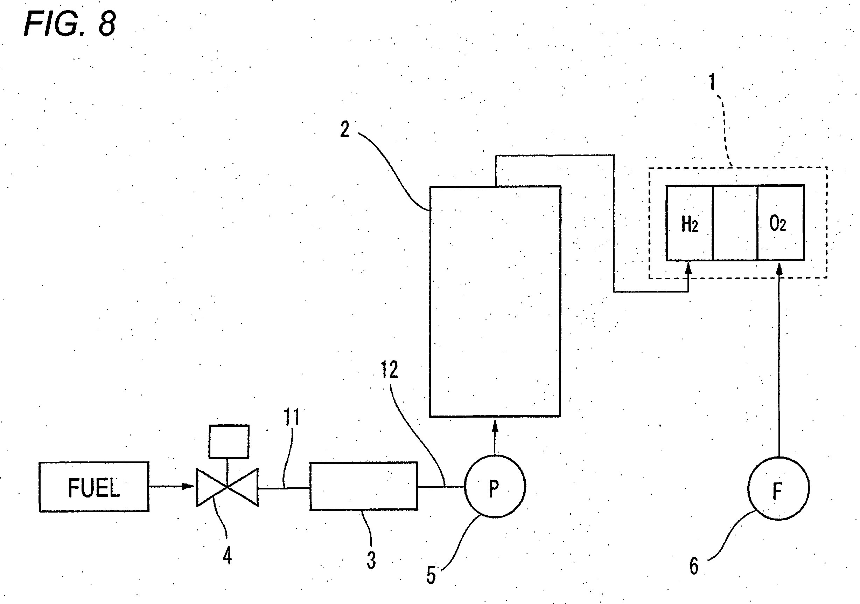

As shown in Fig. 8, the related art fuel cell power generation system includes a fuel cell 1 configured to generate electric power by use of a fuel gas and an oxidant gas; a reformer 2 configured to subject a raw material, such as a natural gas, to a steam reforming reaction, thereby producing a hydrogen-rich reformed gas; a desulfurizer 3 configured to eliminate a sulfur component from a raw gas serving as a raw material for a fuel gas containing hydrogen for power generation of the fuel cell 1 as a main component; a shutoff valve 4 configured to turn on or shut off a supply of the raw material; a booster pump 5 configured to increase the pressure of the raw gas, thereby supplying the raw gas to the reformer 2; and an air blower 6 configured to supply air serving as an oxidant gas to the fuel cell 1. The desulfurizer 3 and the shutoff valve 4 are connected by a raw material pipe 11, and the desulfurizer 3 and the booster pump 5 are connected by a post-desulfurization pipe 12.

A configuration of a related art fuel cell power generation system including a desulfurizer is disclosed in Patent Document 2. The configuration of the related art fuel cell power generation system including a desulfurizer disclosed in Patent Document 2 is now described by reference to Fig. 9. Fig. 9 shows a part of a body configuration in the vicinity of the desulfurizer of the related art fuel cell power generation system disclosed in Patent Document 2.

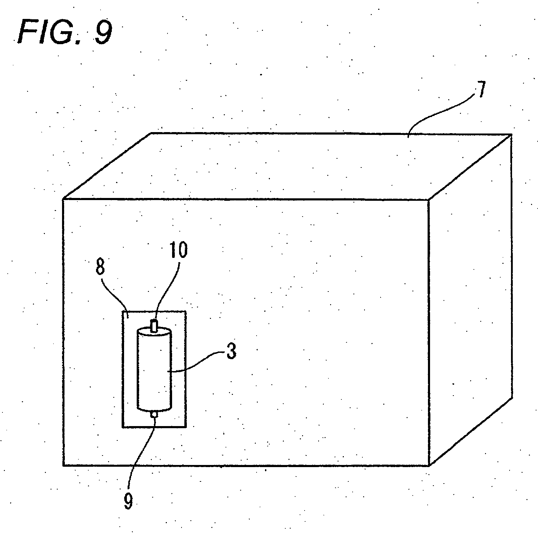

As shown in Fig. 9, the related art fuel cell power generation system includes a fuel cell power generation system body 7 provided with an access panel 8 used for attaching or detaching the desulfurizer 3. The desulfurizer 3 has a cylindrical shape, and includes a desulfurizer inlet 9 provided on a lower surface thereof and a desulfurizer outlet 10 provided on an upper surface thereof.

By reference to Figs. 8 and 9, operation of the related art fuel cell power generation system is described.

A raw material is supplied from the shutoff valve 4, and a sulfur component of the raw material is eliminated by the desulfurizer 3. Subsequently, the raw material is pressurized by the booster pump 5 and supplied to the reformer 2. The raw gas is supplied to the fuel cell 1 as a hydrogen-rich fuel gas by the reforming unit 2. In the meantime, reaction air serving as an oxidant gas is supplied from the air blower 6 to the fuel cell 1, whereby the fuel gas and the reaction air cause an electrochemical reaction, thereby generating electric power.

The desulfurizer 3 eliminates sulfur contained in the raw material by use of an adsorbing phenomenon of a catalyst. Consequently, sulfur elimination capability of the desulfurizer 3 deteriorates in association with an increase in operating time. Therefore, continuing use of the system necessitates periodic replacement of the desulfurizer 3 with a new one. At the periodic replacement, the desulfurizer 3 is replaced through the access port 8. The replacement is performed by disconnecting the desulfurizer inlet 9 of the desulfurizer 3 from the raw material pipe 11 and the desulfurizer outlet 10 from the post-desulfurization pipe 12.

### Related Art Document

### Patent Document

Patent Document 1: JP-A-2008-282572
Patent Document 2: JP-A-2006-140164

US 2003/064259 A1 relates to a method of delivering fuel and air to a fuel cell system. WO 2006/106404 A1 relates to a hydrogen generation device and a fuel cell system including the hydrogen generation device.

### Summary of the Invention

### Problem to be Solved by the Invention

However, in the above-described related-art configuration, the following phenomenon occurs. Specifically, vibrations of the booster pump 5 are transmitted to the desulfurizer 3 through the post-desulfurization pipe 12, and such microvibrations shake the catalyst in the desulfurizer 3. Especially, during the halt of the power generation system in which a raw material does not flow, powder of the catalyst comes out of the desulfurizer outlet 9 provided on the lower surface of the desulfurizer 3 and enters the raw material pipe 11.

In addition, at periodic replacement of the desulfurizer 3, the catalyst powder produced in a new desulfurizer 3 for replacement by transportation vibrations may enter the raw material pipe 11. Further, when the desulfurizer 3 is detached for replacement purpose, airborne dust may enter the raw material pipe 11 from its opening.

When the catalyst powder or airborne dust enters the raw material pipe 11 as described above and arrives at the shutoff valve 4 communicating with the raw material pipe 11, the powder or dust enters a sliding portion of the shutoff valve 4, thereby raising a problem of occurrence of an operation failure such as an opening/losing failure of the shutoff valve 4 or occurrence of an air sealing failure caused when the catalyst powder or airborne dust adheres to a valve seat of the shutoff valve 4.

In the related art configuration, the shutoff valve 4 serves as an auxiliary device configured to communicate with a connection inlet provided on the lower surface of the desulfurizer 3 through the raw material pipe 11. In reality, a flow sensor configured to measure a flow rate of raw gas passing through the desulfurizer 3 may be interposed between the desulfurizer 3 and the shutoff valve 4. In this case, the flow sensor serves as an auxiliary device communicating with the connection inlet provided on the lower surface of the desulfurizer 3 through the raw material pipe 11, and the catalyst powder or airborne dust may cause an operation failure in the flow sensor.

The present invention solves the problem in the related art, and an object thereof is to prevent arrival of catalyst powder or airborne dust at an auxiliary device in a fuel cell power generation system including the auxiliary device communicating with a connection portion provided on a lower surface of a desulfurizer through a raw material pipe, thereby enhancing operation reliability of the device.

### Means for Solving the Problem

In order to accomplish the object, a fuel cell power generation system of the present invention is defined in claim 1 or claim 2.

With this configuration, although the catalyst powder in the desulfurizer or airborne dust enters the raw material pipe, the trap portion can prevent the catalyst powder in the desulfurizer or the airborne dust from arriving at the auxiliary device.

### Advantages of the Invention

In the fuel cell power generation system of the present invention, a trap portion prevents catalyst powder in a desulfurizer or airborne dust entering a pipe from proceeding to an auxiliary device. Therefore, it is possible to prevent an operation failure of the auxiliary device caused by entry of catalyst powder or airborne dust, whereby operation reliability of the auxiliary device can be enhanced.

### Brief Description of the Drawings

Fig. 1 is a schematic diagram of a fuel cell power generation system of a first embodiment of the present invention.
Fig. 2 is a schematic diagram of a part of a body of the fuel cell power generation system of the first embodiment of the present invention in the vicinity of a desulfurizer.
Fig. 3 is a perspective view of a raw material pipe used in a fuel cell power generation system of a second embodiment of the present invention.
Fig. 4 is a schematic diagram of a part of a body of the fuel power generation system of the second embodiment of the present invention in the vicinity of a desulfurizer.
Fig. 5 is a schematic diagram of a part of a body of a fuel power generation system of a third embodiment of the present invention in the vicinity of a desulfurizer.
Fig. 6 is a schematic diagram of a part of a body of a fuel power generation system of a fourth embodiment of the present invention in the vicinity of a desulfurizer.
Fig. 7 is a schematic diagram of a part of a body of a fuel power generation system of a fifth embodiment of the present invention in the vicinity of a desulfurizer.
Fig. 8 is a schematic diagram of a related art fuel cell power generation system.
Fig. 9 is a schematic diagram of a part of a body of the related art fuel cell power generation system in the vicinity of a desulfurizer.

### Mode for Carrying Out the invention

The present invention provides a fuel cell power generation system according to claim 1 or, alternatively, according to claim 2. With this configuration, a trap portion for preventing catalyst powder of the desulfurizer or dust entered from one end of the raw material pipe from arriving at the auxiliary device is placed at a portion of the raw material pipe between the one end thereof and the another end thereof. By providing the trap portion, although the catalyst powder of the desulfurizer or dust enters the raw material pipe, the trap portion can prevent the catalyst powder of the desulfurizer or the dust from arriving at the auxiliary device. Therefore, it is possible to prevent an operation failure of the auxiliary device caused by entry of catalyst powder or airborne dust, whereby operation reliability of the auxiliary device can be enhanced.

In a preferred embodiment, the upstream side of the desulfurizer is situated below a downstream side of the desulfurizer. In this case, the desulfurizer is arranged along the vertical direction, and hence the raw material gas can react with most part of a catalyst. Conversely, when the desulfurizer is arranged along the horizontal direction, the catalyst is unevenly provided so as to be deflected to a lower position in the desulfurizer. Therefore, a space not containing the catalyst is formed in an upper portion in the desulfurizer. Accordingly, the raw material gas may flow into the space and be output from the desulfurizer without desulfurized. This embodiment can eliminate such a possibility.

In a preferred embodiment, a side which is upstream from the trap portion is situated above the trap portion. Since the trap portion can be configured such that the side upstream from the trap portion is situated above the trap portion. Thus, the trap portion can readily be formed.

In a preferred embodiment, the desulfurizer and the auxiliary device are disposed close to each other so as to be arranged side by side substantially along a vertical direction. In general, the desulfurizer is a part to be periodically replaced. Therefore, the desulfurizer is disposed at a structural position to allow superior ease of maintenance. By disposing the desulfurizer and the auxiliary device close to each other so as to be arranged side by side along the vertical direction, it becomes easy to check the auxiliary device and ease of maintenance of the auxiliary device is enhanced.

In a preferred embodiment, a position of a downstream side of the auxiliary device is situated above a position of the upstream side of the desulfurizer. With this configuration, it is possible to prevent a penetration of the catalyst powder or the airborne dust through the trap portion and arriving at the auxiliary device caused by positional energy resultant of fall of the catalyst powder or the airborne dust.

In the first invention according to claim 2, the raw material pipe includes at least one loop portion in the vertical direction. With this configuration, a lowermost portion of the loop portion of the raw material pipe functions as a trap portion. By providing at least one loop portion in the vertical direction in the raw material pipe, entered catalyst powder or airborne dust is accumulated in the lowermost portion of the loop portion of the raw material pipe, thereby being prevented from arriving at the auxiliary device. Consequently, it is possible to prevent an operation failure caused by entered catalyst powder or airborne dust.

By forming the raw material pipe to have a loop shape, the auxiliary device can readily be disposed in the vicinity of a position immediately below the desulfurizer. During operation, the auxiliary device is likely to be affected by pressure fluctuations caused by an increase of pressure of a raw material in a booster pump communicating therewith. Nevertheless, the raw material pipe is shaped to have a loop shape, which results in an increase in pipe length and a buffer space. Therefore, influence of pressure fluctuations in the booster pump is lowered, and the accuracy of measurement of the auxiliary device is enhanced, whereby stable device operation can be realized.

In a preferred embodiment, the trap portion has an inner diameter greater than an inner diameter of a portion of the raw material pipe except the trap portion. Since the trap portion has the inner diameter greater than the inner diameter of the portion of the raw material pipe except the trap portion, even when the catalyst powder or the airborne dust is accumulated in the trap portion, it hardly impedes a raw gas flow.

Further, during operation, the auxiliary device is likely to be affected by pressure fluctuations caused by an increase of pressure of a raw material in the booster pump communicating therewith. Nevertheless, by increasing the inner diameter of the trap portion situated at a portion of the raw material pipe between the one end thereof and another end thereof, the inner volume of the trap portion can be greater, and a buffer space can be increased. Therefore, influence of pressure fluctuations in the booster pump is lowered, and the accuracy of measurement of the auxiliary device is enhanced, whereby stable device operation can be realized.

The fuel cell power generation system according to embodiments of the present invention is described by reference to the drawings. However, the present invention is not limited by the embodiments. Further, same or similar structural elements as those described in the related art or preceding embodiments are assigned the same reference numerals, and their detailed explanations are omitted.

### (First Embodiment)

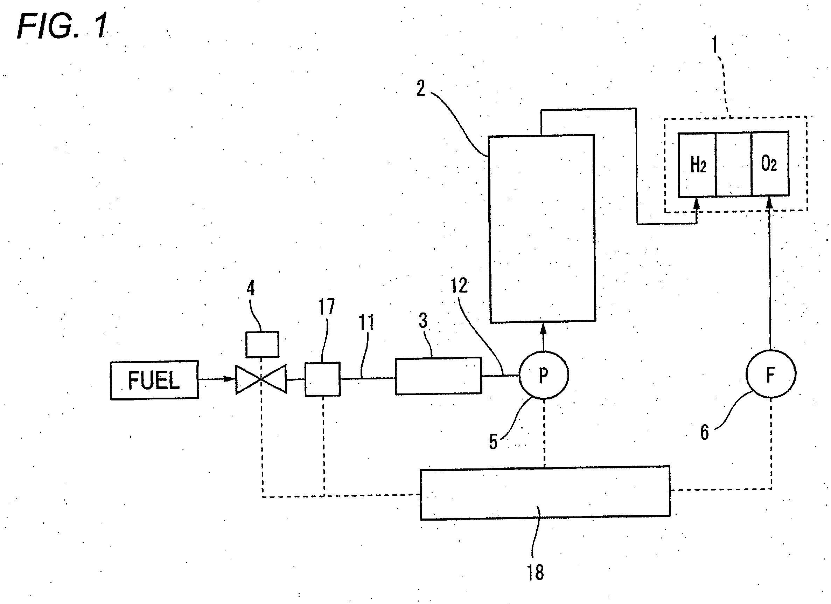

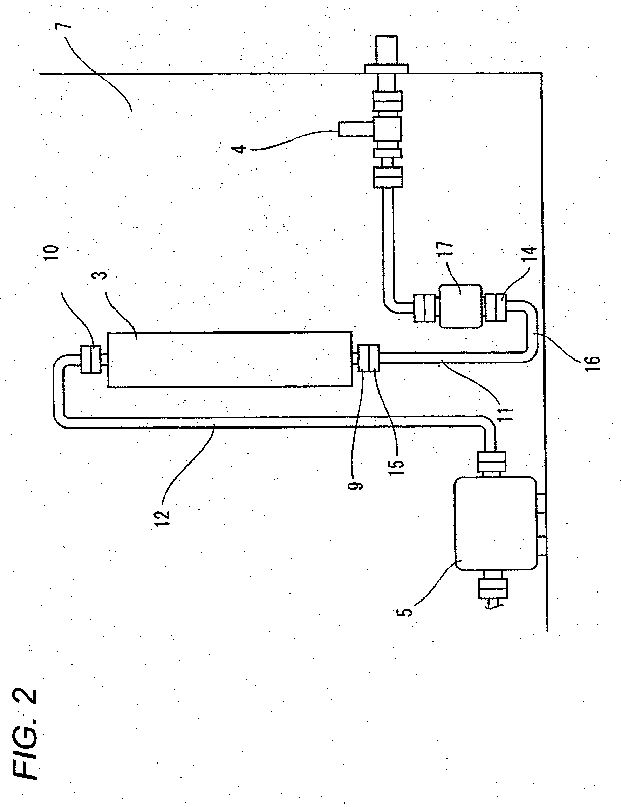

Fig. 1 is a schematic diagram of a fuel cell power generation system of a first embodiment of the present invention, and Fig. 2 is a schematic diagram of a part of a body of the fuel cell power generation system of the first embodiment of the present invention in the vicinity of a desulfurizer.

As shown in Fig. 1, the fuel cell power generation system of the first embodiment includes: a fuel cell 1 configured to generate electric power by use of a fuel gas and an oxidant gas; a reformer 2 configured to subject a raw material, such as a natural gas, to steam reforming reaction, thereby producing a hydrogen-rich reformed gas; a desulfurizer 3 configured to eliminate a sulfur component from a raw gas serving as a raw material of the fuel gas containing hydrogen for power generation of the fuel cell 1 as a main component; a shutoff valve 4 configured to turn on or shut off a supply of the raw material; a booster pump 5 configured to increase the pressure of the raw gas, thereby supplying the raw gas to the reformer 2; an air blower 6 configured to supply air serving as an oxidant gas to the fuel cell 1; a flow sensor 17 disposed upstream from the desulfurizer 3 and configured to measure a flow rate of the raw material passing through the desulfurizer 3; a raw material pipe 11 that connects a desulfurizer inlet on a lower surface of the desulfurizer 3 to the flow sensor 17 to establish communication therebetween; and a controller 18 connected to the shutoff valve 4, the flow sensor 17, the booster pump 5 and the air blower 6 and configured to control the shutoff valve 4, the booster pump 5 and the air blower 6.

The controller 18 controls operation of the fuel cell power generation system, such as determining an amount of required air supplied to the fuel cell 1 according to a value of the flow rate detected by the flow sensor 17 and sending a control signal to the air blower 6. The shutoff valve 4, the flow sensor 17, the raw material pipe 11, the desulfurizer 3, a post-desulfurization pipe 12, the booster pump 5, the reformer 2 and the fuel cell 1 are connected in this order from an upstream side to a downstream side.

As shown in Fig. 2, in the fuel cell power generation system of the present embodiment, the flow sensor 17 is disposed in the vicinity of a position immediately below the desulfurizer 3, and is connected to the desulfurizer 3 so as to communicate therewith by the raw material pipe 11 that is bent substantially in a J shape. The raw material pipe 11 has a raw material pipe inlet 14 that is opened upward and connected to the flow sensor 17 and a raw material pipe outlet 15 that is opened upward and connected to a desulfurizer inlet 9. The raw material pipe 11 is configured such that when the raw material pipe 11 is mounted to the fuel cell power generation system body 7, the raw material pipe inlet 14 connected to the flow sensor 17 is situated below the raw material pipe inlet 14 and above a trap portion 16 situated at a lowermost position of the raw material pipe 11.

Operation of the fuel cell power generation system of the embodiment configured above is now described.

A raw material supplied from the shutoff valve 4 passes through the flow sensor 17, and a sulfur component of the raw material is eliminated by the desulfurizer 3. Subsequently, the raw material is pressurized by the booster pump 5 and supplied to the reformer 2. The raw gas is supplied to the fuel cell 1 as a hydrogen-rich fuel gas by the reforming unit 2. In the meantime, the controller 18 calculates an amount of air necessary for the fuel cell 1 according to the flow rate of raw material measured by the flow sensor 17 and sends the operation signal to the air blower 6. Reaction air serving as an oxidant gas is supplied from the air blower 6 to the fuel cell 1, whereby the fuel gas and the reaction air cause an electrochemical reaction, thereby generating electric power.

The desulfurizer 3 eliminates sulfur contained in the raw material by use of an adsorbing phenomenon of a catalyst. Consequently, sulfur elimination capability of the desulfurizer 3 deteriorates in association with an increase in operating time. Accordingly, continuing use of the desulfurizer necessitates periodic replacement of the desulfurizer 3 with a new one. At the periodic replacement, the desulfurizer inlet 9 of the desulfurizer 3 is disconnected from the raw material pipe 11, and a desulfurizer outlet 10 is disconnected from the post-desulfurization pipe 12.

Because of vibrations of the booster pump 5 transmitted to the desulfurizer 3 during operation through the post-desulfurization pipe 12, a catalyst in the desulfurizer 3 is shaken by the microvibrations, and powder in the catalyst may come out of the desulfurizer inlet 9 provided on the lower surface of the desulfurizer 3 and enters the raw material pipe 11. In addition, at the periodic replacement of the desulfurizer 3, the catalyst powder of a new desulfurizer 3 for replacement caused by transport vibrations may enter the raw material pipe 11. Further, airborne dust may enter the raw material pipe outlet 15 when the desulfurizer 3 is detached for replacement with a new desulfurizer 3.

However, since the raw material pipe 11 bent substantially in the J shape is used, the catalyst powder or airborne dust entering the raw material pipe 11 is accumulated in the trap portion 16 provided at the lowest portion of the raw material pipe 11. Consequently, catalyst powder or airborne dust does not arrive at the flow sensor 17 located at an upper position with respect to the trap portion 16. Therefore, it is possible to prevent an operation failure of the flow sensor 17 caused by the entered catalyst powder or airborne dust.

As described above, the fuel cell power generation system of the present embodiment includes: the desulfurizer 3 configured to eliminate a sulfur component from a raw gas serving as a raw material of a fuel gas containing hydrogen for power generation of the fuel cell 1 as a main component; the flow sensor 17 disposed upstream from the desulfurizer 3 and configured to measure a flow rate of raw gas passing through the desulfurizer 3; and the raw material pipe 11 having one end connected to a lower end of the desulfurizer 3 and another end connected to the flow sensor 17. In the system, the raw gas flows through an inside of the desulfurizer 3 in an upward direction, and the desulfurizer 3 is detachably connected to the raw material pipe 11. The desulfurizer 3 and the flow sensor 17 are disposed close to each other so as to be arranged side by side along a substantially vertical direction. The trap portion 16 configured to prevent arrival of the catalyst powder of the desulfurizer 3 or the dust entered from the one end of the raw material pipe 11 at the flow sensor 17 is disposed at a portion of the raw material pipe 11 between the one end thereof and the another end thereof. The trap portion 16 is configured such that side upstream from the trap portion 16 is situated above the trap portion 16.

The trap portion 16 configured to prevent arrival of the catalyst powder of the desulfurizer 3 or dust entering from one end of the raw material pipe 11 at the flow sensor 17 is provided at a position of the raw material pipe 11 between the one end thereof and the another end thereof. With this configuration, although the catalyst powder of the desulfurizer 3 and the dust enters the raw material pipe 11, the trap portion 16 prevents the catalyst powder of the desulfurizer 3 and the dust from arriving at the flow sensor 17. Therefore, it is possible to prevent an operation failure of the flow sensor 17 caused by entry of catalyst powder or airborne dust, whereby operation reliability of the flow sensor 17 can be enhanced.

The trap portion 16 may be formed such that side upstream from the trap portion 16 becomes higher than the trap portion 16. With this configuration, the trap portion 16 can readily be formed simply by bending the raw material pipe 11.

In general, the desulfurizer 3 is a part to be periodically replaced. Therefore, the desulfurizer 3 is disposed at a structural position to allow superior ease of maintenance. By disposing the flow sensor 17 in the vicinity of the position immediately below the desulfurizer 3, it becomes easy to check the flow sensor 3, whereby ease of maintenance of the flow sensor 3 is enhanced.

In the embodiment, the flow sensor 17 serves as an exemplified auxiliary device configured to communicate with the connection inlet provided on the lower surface of the desulfurizer 3 through the raw material pipe 11. However, even when another auxiliary device, such as the shutoff valve 4 used in the fuel cell power generation system and a pressure sensor, is provided at the same structural location, it is also possible to prevent an operation failure of the auxiliary device caused by the catalyst powder or airborne dust.

### (Second Embodiment)

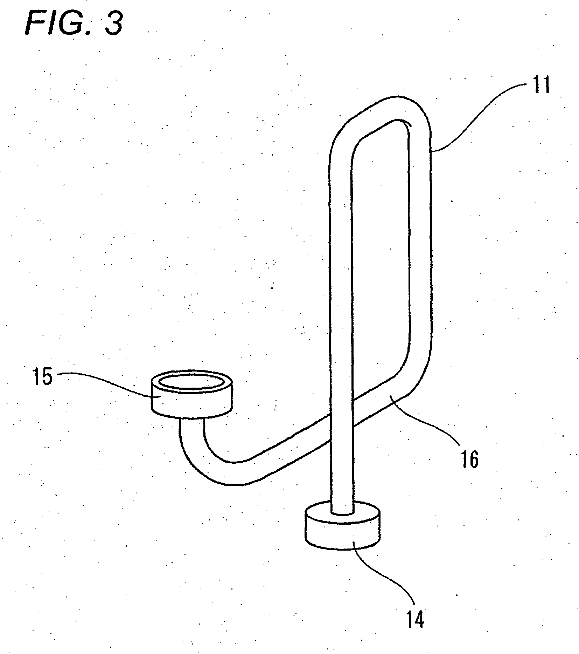

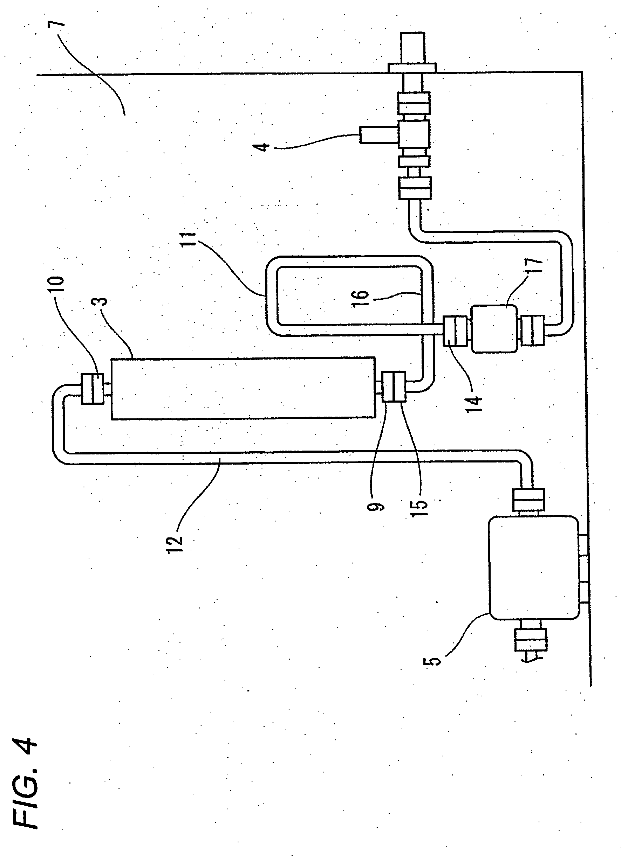

Fig. 3 is a perspective view of a raw material pipe used in a fuel cell power generation system of a second embodiment of the present invention, and Fig. 4 is a schematic diagram of a part of a body of the fuel cell power generation system of the embodiment in the vicinity of a desulfurizer.

As shown in Fig. 3, in the fuel cell power generation system of the second embodiment, the raw material pipe 11 is bent into a loop shape along the vertical direction. The raw material pipe 11 includes the raw material pipe inlet 14 opened downward for a connection with the flow sensor 17, the raw material pipe outlet 15 opened upward in the vertical direction for a connection with the desulfurizer inlet 9, and the trap portion 16 serving as a lowermost portion of the loop portion of the raw material pipe 11.

As shown in Fig. 4, in the fuel cell power generation system of the second embodiment, the flow sensor 17 is disposed in the vicinity of a position immediately below the desulfurizer 3, and is connected to the desulfurizer 3 so as to communicate therewith by the raw material pipe 11.

In the second embodiment, the raw material pipe 11 bent in a loop shape along the vertical direction, instead of the raw material pipe 11 substantially bent in a J shape in the first embodiment. In other respects, the second embodiment is structurally identical with the first embodiment.

Since the fuel cell power generation system of the second embodiment is substantially identical with the fuel cell power generation system of the first embodiment in terms of operation, an explanation is given to a difference therebetween.

Also in the fuel cell power generation system of the second embodiment, because of vibrations of the booster pump 5 transmitted to the desulfurizer 3 during operation through the post-desulfurization pipe 12, the catalyst in the desulfurizer 3 is shaken by the microvibrations, and catalyst powder may come out of the desulfurizer inlet 9 provided on the lower surface of the desulfurizer 3, to thus enter the raw material pipe 11. In addition, at the periodic replacement of the desulfurizer 3, the catalyst powder of a new desulfurizer 3 for replacement caused by transport vibrations may enter the raw material pipe 11. Further, airborne dust may enter the raw material pipe outlet 15 when the desulfurizer 3 is detached for replacement with a new desulfurizer 3.

However, in the fuel cell power generation system of the second embodiment, since the raw material pipe 11 is formed in a loop shape along the vertical direction, the entered catalyst powder or airborne dust is accumulated in the trap portion 16 provided at the lowermost portion of the loop portion of the raw material pipe 11 and does not arrive at the flow sensor 17. Consequently, it is possible to prevent an operation failure of the flow sensor 17 caused by the entered catalyst powder or airborne dust.

Since the raw material pipe 11 is formed in a loop shape, the flow sensor 17 can readily be disposed in the vicinity of a position immediately below the desulfurizer 3. Since the desulfurizer 3 is a part to be periodically replaced, the desulfurizer 3 is disposed at a structural position to allow superior ease of maintenance. Consequently, the flow sensor 17 disposed in the vicinity of the position immediately below the desulfurizer 3 exhibits superior ease of maintenance.

During operation, the flow sensor 17 is likely to be affected by pressure fluctuations caused by an increase of pressure of a raw material in the booster pump 5 communicating therewith. Nevertheless, the raw material pipe 11 is shaped to have a loop shape, which results in an increase in pipe length and a buffer space. Therefore, influence of pressure fluctuations in the booster pump 5 is lowered, and the accuracy of measurement of the flow sensor 17 is enhanced, whereby stable device operation can be realized. In the embodiment, the loop shape of the raw material pipe 11 is one turn. However, the number of loops may be increased, which increases the buffer space and further lowers the influence of the booster pump 5.

As described above, in the fuel cell power generation system of the second embodiment, the raw material pipe 11 includes at least one loop portion in the vertical direction, and the lowermost portion of the loop portion of the raw material pipe 11 functions as the trap portion 16. By providing at least one loop portion in the vertical direction in the raw material pipe 11, entered catalyst powder or airborne dust is accumulated in the trap portion 16 located at the lowermost portion of the loop portion of the raw material pipe 11 and does not arrive at the flow sensor 17. Consequently, it is possible to prevent an operation failure of the flow sensor 17 caused by entered catalyst powder or airborne dust. By forming the raw material pipe 11 to have a loop shape, the flow sensor 17 can easily be disposed in the vicinity of the position immediately below the desulfurizer 3.

In the second embodiment, the flow sensor 17 serves as an exemplified auxiliary device configured to communicate with the connection inlet provided on the lower surface of the desulfurizer 3 through the raw material pipe 11. However, even when another auxiliary device, such as the shutoff valve 4 used in the fuel cell power generation system and a pressure sensor, is provided at the same structural location, it is also prevent an operation failure of the auxiliary device caused by the catalyst powder or airborne dust.

### (Third Embodiment)

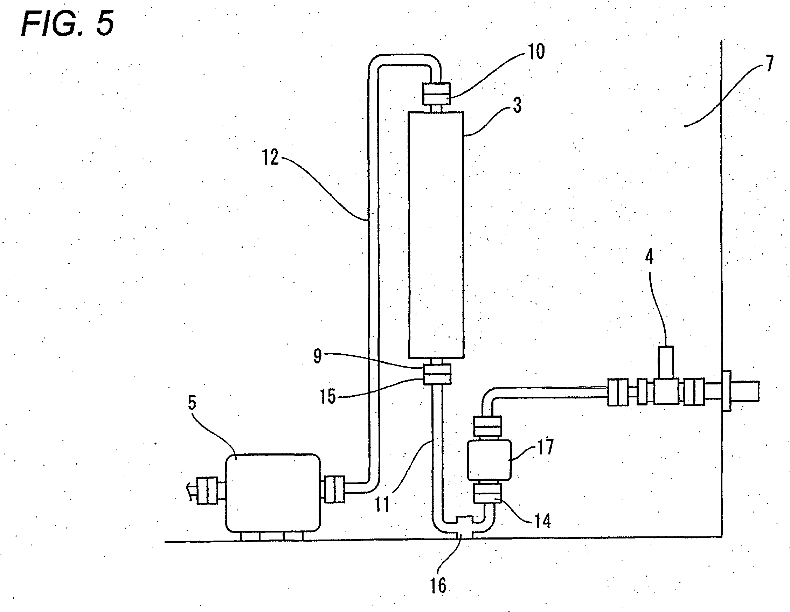

Fig. 5 is a schematic diagram of a part of a body of a fuel cell power generation system of a third embodiment of the present invention in the vicinity of the desulfurizer 3.

As shown in Fig. 5, in the fuel cell power generation system of the third embodiment is configured such that an inner diameter of the trap portion 16 is set greater than an inner diameter of a portion the raw material pipe 11 except the trap portion 16, in the fuel cell power generation system of the first embodiment. In other respects, the third embodiment is structurally identical with the first embodiment.

Since the fuel cell power generation system of the third embodiment is substantially identical with the fuel cell power generation system of the first embodiment in terms of operation, an explanation is given to a difference therebetween.

Also in the fuel cell power generation system of the third embodiment, because of vibrations of the booster pump 5 transmitted to the desulfurizer 3 during operation through the post-desulfurization pipe 12, the catalyst in the desulfurizer 3 is shaken by the microvibrations, and catalyst powder may come out of from the desulfurizer inlet 9 provided on the lower surface of the desulfurizer 3, to thus enter the raw material pipe 11. In addition, at the periodic replacement of the desulfurizer 3, the catalyst powder of a new desulfurizer 3 for replacement caused by transport vibrations may enter the raw material pipe 11. Further, airborne dust may enter the raw material pipe outlet 15 when the desulfurizer 3 is eliminated for replacement with a new desulfurizer 3.

However, in the fuel cell power generation system of the third embodiment, the raw material pipe 11 substantially bent in the J shape is used, and the inner diameter of the trap portion 16 situated at the lowermost portion of the raw material pipe 11 is set greater than the inner diameter of a portion of the raw material pipe 11 except the trap portion 16. Therefore, catalyst powder or airborne dust entering the raw material pipe 11 is accumulated in the trap portion 16 situated at the lowermost portion of the raw material pipe 11 and does not arrive at the flow sensor 17 disposed above the trap portion 16, whereby it is possible to prevent an operation failure of the flow sensor 17 caused by entered catalyst powder or airborne dust. Since the trap portion 16 has an inner diameter greater than the inner diameter of a portion of the raw material pipe 11 except the trap portion 16, even when the catalyst powder or airborne dust is accumulated in the trap portion 16, it hardly impedes a raw gas flow.

Further, during operation, the flow sensor 17 is likely to be affected by pressure fluctuations caused by an increase of pressure of the raw material in the booster pump 5 communicating therewith. Nevertheless, by increasing the inner diameter of the trap portion 16 situated at a portion of the raw material pipe 11 between the one end thereof and another end thereof, the inner volume of the trap portion 16 can be increased, and a buffer space can be increased. Therefore, influence of pressure fluctuations in the booster pump 5 is lowered, and the accuracy of measurement of the flow sensor 17 is enhanced, whereby stable device operation can be realized.

In the third embodiment, the flow sensor 17 serves as an exemplified auxiliary device configured to communicate with the connection inlet provided on the lower surface of the desulfurizer 3 through the raw material pipe 11. However, even when another auxiliary device, such as the shutoff valve 4 used in the fuel cell power generation system and a pressure sensor, is provided at the same structural location, it is also possible to prevent an operation failure of the auxiliary device caused by the catalyst powder or airborne dust.

### (Fourth Embodiment)

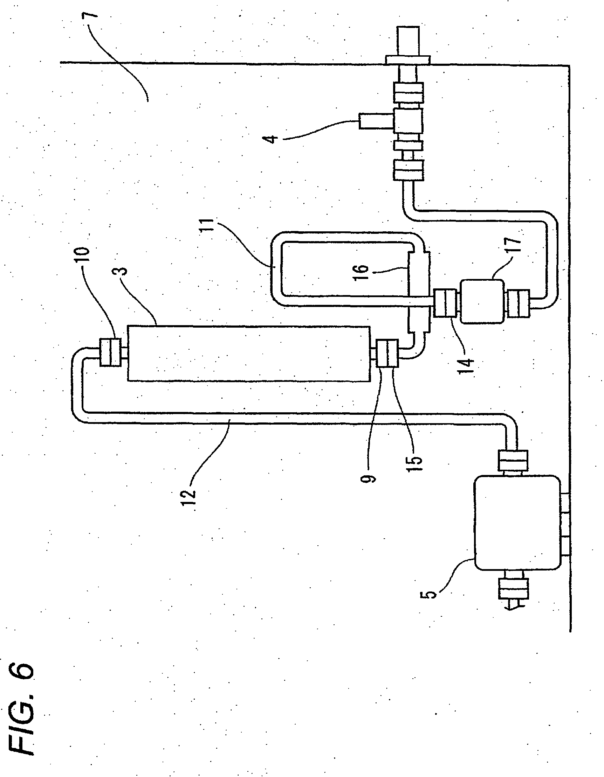

Fig. 6 is a schematic diagram of a part of a body of a fuel cell power generation system of a fourth embodiment of the present invention in the vicinity of the desulfurizer.

As shown in Fig. 6, the fuel cell power generation system of the fourth embodiment is configured such that in the fuel cell power generation system of the second embodiment, an inner diameter of the trap portion 16 is set greater than an inner diameter of a portion of the raw material pipe 11 except the trap portion 16. In other respects, the third embodiment is structurally identical with the second embodiment.

Since the fuel cell power generation system of the fourth embodiment is substantially identical with the fuel cell power generation system of the second embodiment in terms of operation, an explanation is given to a difference therebetween.

Also in the fuel cell power generation system of the fourth embodiment, because of vibrations of the booster pump 5 transmitted to the desulfurizer 3 during operation through the post-desulfurization pipe 12, the catalyst in the desulfurizer 3 is shaken by the microvibrations, and catalyst powder may come out of the desulfurizer inlet 9 provided on the lower surface of the desulfurizer 3, to thus enter the raw material pipe 11. In addition, at the periodic replacement of the desulfurizer 3, the catalyst powder of a new desulfurizer 3 for replacement caused by transport vibrations may enter the raw material pipe 11. Further, airborne dust may enter the raw material pipe outlet 15 in a period during which the desulfurizer 3 is eliminated for replacement with a new desulfurizer 3.

However, in the fuel cell power generation system of the fourth embodiment, the raw material pipe 11 is bent in a loop shape in the vertical direction, and the inner diameter of the trap portion 16 situated at the lowermost portion of the loop portion of the raw material pipe 11 is set greater than the inner diameter of a portion the raw material pipe 11 except the trap portion 16. Therefore, catalyst powder or airborne dust entering the raw material pipe 11 is accumulated in the trap portion 16 situated at the lowermost portion of the loop portion of the raw material pipe 11 and does not arrive at the flow sensor 17, whereby it is possible to prevent an operation failure of the flow sensor 17 caused by entered catalyst powder or airborne dust, Since the trap portion 16 has an inner diameter greater than the inner diameter of a portion of the raw material pipe 11 except the trap portion 16, even when the catalyst powder or airborne dust is accumulated in the trap portion 16, it hardly impedes a raw gas flow.

Since the raw material pipe 11 is formed in a loop shape, the flow sensor 17 can readily be disposed in the vicinity of a position immediately below the desulfurizer 3. Since the desulfurizer 3 is a part to be periodically replaced, the desulfurizer 3 is disposed at a structural position to allow superior ease of maintenance. Consequently, the flow sensor 17 disposed in the vicinity of the position immediately below the desulfurizer 3 exhibits superior ease of maintenance.

During operation, the flow sensor 17 is likely to be affected by pressure fluctuations caused by an increase of pressure of a raw material in the booster pump 5 communicating therewith. Nevertheless, by increasing the inner diameter of the trap portion 16 provided at a portion of the raw material pipe 11 between the one end thereof and another end thereof, the inner volume of the trap portion 16 can be increased, and the buffer space can also be increased. Therefore, influence of pressure fluctuations in the booster pump 5 is lowered, and the accuracy of measurement of the flow sensor 17 is enhanced, whereby stable device operation can be realized.

In the fourth embodiment, the flow sensor 17 serves as an exemplified auxiliary device configured to communicate with the connection inlet provided on the lower surface of the desulfurizer 3 through the raw material pipe 11. However, even when another auxiliary device, such as the shutoff valve 4 used in the fuel cell power generation system and a pressure sensor, is provided at the same structural location, it is also possible to prevent an operation failure of the auxiliary device caused by catalyst powder or airborne dust.

### (Fifth Embodiment)

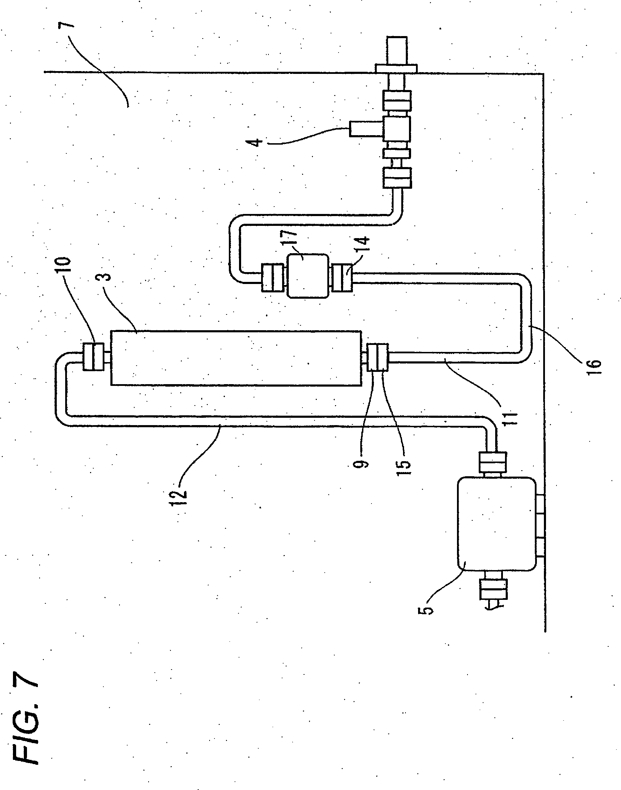

Fig. 7 is a schematic diagram of a part of a body of a fuel cell power generation system of a fifth embodiment of the present invention in the vicinity of the desulfurizer 3.

As shown in Fig. 7, the fuel cell power generation system of the fifth embodiment is configured such that in the fuel cell power generation system of the first embodiment, a position of a downstream side of the flow sensor 17 is situated above a position of an upstream side of the desulfurizer 3..In other respects, the fifth embodiment is structurally identical with the first embodiment. The position of the downstream side of the flow sensor 17 refers to a position of a side of a portion of the flow sensor 17 closer to the raw material pipe inlet 14 in Fig. 7. Further, the position of the upstream side of the desulfurizer 3 refers to a position of a side of the desulfurizer 3 closer to the raw material pipe outlet 15 in Fig. 7.

Since the fuel cell power generation system of the fifth embodiment is substantially identical with the fuel cell power generation system of the first embodiment in terms of operation, an explanation is given to a difference therebetween.

Also in the fuel cell power generation system of the fifth embodiment, because of vibrations of the booster pump 5 transmitted to the desulfurizer 3 during operation through the post-desulfurization pipe 12, the catalyst in the desulfurizer 3 is shaken by the microvibrations, and catalyst powder may come out of the desulfurizer inlet 9 provided on the lower surface of the desulfurizer 3, to thus enter the raw material pipe 11. In addition, at the periodic replacement of the desulfurizer 3, the catalyst powder of a new desulfurizer 3 for replacement caused by transport vibrations may enter the raw material pipe 11. Further, airborne dust may enter the raw material pipe outlet 15 when the desulfurizer 3 is eliminated for replacement with a new desulfurizer 3.

However, in the fuel cell power generation system of the fifth embodiment, the raw material pipe 11 substantially bent in the J shape is used, and the position of the downstream side of the flow sensor 17 is situated above the position of the upstream side of the desulfurizer 3. Consequently, positional energy resultant of fall of catalyst powder or airborne dust in the raw material pipe 11 is insufficient for the catalyst powder or airborne dust to pass through the trap portion 16 and arrive at the flow sensor 17 situated above the trap portion 16. Therefore, it is possible to prevent an operation failure of the flow sensor 17 caused by entered catalyst powder or airborne dust.

In the fifth embodiment, the flow sensor 17 serves as an exemplified auxiliary device configured to communicate with the connection inlet provided on the lower surface of the desulfurizer 3 through the raw material pipe 11. However, even when another auxiliary device, such as the shutoff valve 4 used in the fuel cell power generation system and a pressure sensor, is provided at the same structural location, it is also possible to prevent an operation failure of the auxiliary device caused by the catalyst powder or airborne dust.

### (Modification of Fifth Embodiment)

The trap portion 16 in the raw material pipe 11 shown in Fig. 7 may be configured such that an inner diameter thereof is set larger than an inner diameter of a portion of the raw material pipe .11 except the trap portion 16, such as the trap portion 16 shown in Fig. 5. Even in this case, as in the case of the fifth embodiment, positional energy resultant of fall of catalyst powder or airborne dust in the raw material pipe 11 is insufficient for the catalyst powder or airborne dust to pass through the trap portion 16 and arrive at the flow sensor 17 situated above the trap portion 16. Consequently, it is possible to prevent an operation failure of the flow sensor 17 caused by entered catalyst powder or airborne dust. Further, during operation, the flow sensor 17 is likely to be affected by pressure fluctuations caused by an increase of pressure of a raw material in the booster pump 5 communicating therewith. Nevertheless, by increasing the inner diameter of the trap portion 16 provided at a portion of the raw material pipe 11 between one end thereof and another end thereof, the inner volume of the trap portion 16 can be increased, and the buffer space can also be increased. Therefore, influence of pressure fluctuations in the booster pump 5 is lowered, and the accuracy of measurement of the flow sensor 17 is enhanced, whereby stable device operation can be realized.

The present patent application is based on Japanese Patent Application (Application No. 2009-96860) filed on April 13, 2009.

### Industrial Applicability

In the fuel cell power generation system of the present invention, the trap portion prevents catalyst powder of the desulfurizer or airborne dust, which enters in the raw material pipe 11, from entering the flow sensor. Therefore, it is possible to prevent an operation failure of the flow sensor caused by entry of catalyst powder or airborne dust, whereby operation reliability of the flow sensor can be enhanced. Consequently, the present invention is useful for a fuel cell power generation system for home use in which a desulfurizer is connected to an auxiliary device used in the fuel cell power generation system, such as a flow sensor located below the desulfurizer, by a raw material pipe, and in which the desulfurizer is to be periodically replaced.

### Description of Reference Signs

- 1: FUEL CELL
- 3: DESULFURIZER
- 11: RAW MATERIAL PIPE
- 16: TRAP PORTION
- 17: FLOW SENSOR

## Claims

1. A fuel cell power generation system comprising:
a desulfurizer (3) configured to eliminate a sulfur component from a raw gas serving as a raw material of a fuel gas containing hydrogen for power generation of a fuel cell as a main component;
an auxiliary device (4, 17), selected from a flow sensor (17), a shutoff valve (4) and a pressure sensor, disposed upstream from the desulfurizer (3); and
a raw material pipe (11) having one end connected to an upstream side of the desulfurizer (3) and another end connected to the auxiliary device (4, 17),
wherein the raw gas flows through an inside of the desulfurizer (3),
wherein the desulfurizer (3) is detachably connected to the raw material pipe (11),
wherein a trap portion (16) configured to accumulate catalyst powder of the desulfurizer (3) or dust, which enters from the one end of the raw material pipe (11), is provided at a portion of the raw material pipe (11) between the one end thereof and the another end thereof, and
wherein the raw material pipe (11) is configured to be in a J shape such that the trap portion (16) is situated at a lowermost position of the raw material pipe (11).

2. A fuel cell power generation system comprising:
a desulfurizer (3) configured to eliminate a sulfur component from a raw gas serving as a raw material of a fuel gas containing hydrogen for power generation of a fuel cell as a main component;
an auxiliary device (4, 17), selected from a flow sensor (17), a shutoff valve (4) and a pressure sensor, disposed upstream from the desulfurizer (3); and
a raw material pipe (11) having one end connected to an upstream side of the desulfurizer (3) and another end connected to the auxiliary device (4, 17),
wherein the raw gas flows through an inside of the desulfurizer (3),
wherein the desulfurizer (3) is detachably connected to the raw material pipe (11),
wherein a trap portion (16) configured to accumulate catalyst powder of the desulfurizer (3) or dust, which enters from the one end of the raw material pipe (11), is provided at a portion of the raw material pipe (11) between the one end thereof and the another end thereof, and
the raw material pipe (11) comprises at least one loop portion in the vertical direction such that the trap portion (16) serves as a lowermost portion of the loop portion.

3. The fuel cell power generation system according to claim 1 or 2,
wherein the upstream side of the desulfurizer (3) is situated below a downstream side of the desulfurizer (3).

4. The fuel cell power generation system according to any one of claims 1 to 3,
wherein a side which is upstream from the trap portion is situated above the trap portion.

5. The fuel cell power generation system according to any one of claims 1 to 4,
wherein the desulfurizer (3) and the auxiliary device (4, 17) are disposed close to each other so as to be arranged side by side substantially along a vertical direction.

6. The fuel cell power generation system according to any one of claims 1, 3 or 4,
wherein a position of a downstream side of the auxiliary device (4, 17) is situated above a position of the upstream side of the desulfurizer (3).

7. The fuel cell power generation system according to any one of claims 1 to 6,
wherein the trap portion (16) has an inner diameter greater than an inner diameter of a portion of the raw material pipe (11) except the trap portion.

## Patentansprüche

1. Brennstoffzellenstromerzeugungssystem, umfassend:
einen Entschwefler (3), der dazu konfiguriert ist, eine Schwefelkomponente aus einem Rohgas zu eliminieren, das als Rohstoff für ein Brenngas dient, welches Wasserstoff zur Stromerzeugung in einer Brennstoffzelle als Hauptkomponente enthält;
eine Hilfseinrichtung (4, 17), die aus einem Durchflusssensor (17), einem Absperrventil (4) und einem Drucksensor gewählt wird und stromaufwärts vor dem Entschwefler (3) angeordnet ist; und
ein Rohstoffrohr (11) dessen eines Ende mit einer vorderen Seite des Entschweflers (3) verbunden ist und dessen anderes Ende mit der Hilfseinrichtung (4, 17) verbunden ist,
wobei das Rohgas durch eine Innenseite des Entschweflers (3) fließt,
wobei der Entschwefler (3) lösbar mit dem Rohstoffrohr (11) verbunden ist,
wobei ein Auffangabschnitt (16), der dazu konfiguriert ist, Katalysatorpulver des Entschweflers (3) oder Staub aufzufangen, der von dem einen Ende des Rohstoffrohrs (11) eintritt, an einem Abschnitt des Rohstoffrohrs (11) zwischen dessen einem Ende und dessen anderem Ende angeordnet ist, und
wobei das Rohstoffrohr (11) in einer J-Form konfiguriert ist, so dass der Auffangabschnitt (16) an einer untersten Position des Rohstoffrohrs (11) angeordnet ist.

2. Brennstoffzellenstromerzeugungssystem, umfassend:
einen Entschwefler (3), der dazu konfiguriert ist, eine Schwefelkomponente aus einem Rohgas zu eliminieren, das als Rohstoff für ein Brenngas dient, welches Wasserstoff zur Stromerzeugung in einer Brennstoffzelle als Hauptkomponente enthält;
eine Hilfseinrichtung (4, 17), die aus einem Durchflusssensor (17), einem Absperrventil (4) und einem Drucksensor gewählt wird und stromaufwärts vor dem Entschwefler (3) angeordnet ist; und
ein Rohstoffrohr (11) dessen eines Ende mit einer vorderen Seite des Entschweflers (3) verbunden ist und dessen anderes Ende mit der Hilfseinrichtung (4, 17) verbunden ist,
wobei das Rohgas durch eine Innenseite des Entschweflers (3) fließt,
wobei der Entschwefler (3) lösbar mit dem Rohstoffrohr (11) verbunden ist,
wobei ein Auffangabschnitt (16), der dazu konfiguriert ist, Katalysatorpulver des Entschweflers (3) oder Staub aufzufangen, der von dem einen Ende des Rohstoffrohrs (11) eintritt, an einem Abschnitt des Rohstoffrohrs (11) zwischen dessen einem Ende und dessen anderem Ende angeordnet ist, und
das Rohrstoffrohr (11) mindestens einen Schleifenabschnitt in vertikaler Richtung umfasst, so dass der Auffangabschnitt (16) als ein unterster Abschnitt des Schleifenabschnitts dient.

3. Brennstoffzellenstromerzeugungssystem nach Anspruch 1 oder 2,
wobei die stromaufwärts befindliche Seite des Entschweflers (3) unterhalb einer stromabwärts befindlichen Seite des Entschwefler (3) angeordnet ist.

4. Brennstoffzellenstromerzeugungssystem nach einem der Ansprüche 1 bis 3,
wobei eine Seite, die sich stromaufwärts von dem Auffangabschnitt befindet, oberhalb des Auffangabschnitts angeordnet ist.

5. Brennstoffzellenstromerzeugungssystem nach einem der Ansprüche 1 bis 4,
wobei der Entschwefler (3) und die Hilfseinrichtung (4, 17) nahe beieinander liegen, so dass sie im Wesentlichen entlang einer vertikalen Richtung Seite an Seite angeordnet sind.

6. Brennstoffzellenstromerzeugungssystem nach einem der Ansprüche 1, 3 oder 4,
wobei sich eine Position einer stromabwärts liegenden Seite der Hilfseinrichtung (4, 17) oberhalb einer Position der stromaufwärts liegenden Seite des Entschweflers (3) befindet.

7. Brennstoffzellenstromerzeugungssystem nach einem der Ansprüche 1 bis 6,
wobei der Auffangabschnitt (16) einen größeren Innendurchmesser als ein Innendurchmesser eines Abschnitts des Rohstoffrohrs (11) mit Ausnahme des Auffangabschnitts aufweist.

## Revendications

1. Système de génération d'énergie à pile à combustible comprenant :
un désulfurant (3) configuré pour éliminer un composant soufré d'un gaz brut servant de matière première d'un gaz combustible contenant de l'hydrogène pour la génération d'énergie d'une pile à combustible, en tant que composant principal ;
un dispositif auxiliaire (4, 17) choisi parmi un détecteur de débit (17), un robinet d'arrêt (4) et un détecteur de pression, disposé en amont du désulfurant (3) ; et
un tuyau de matière première (11) ayant une extrémité raccordée au côté amont du désulfurant (3) et une autre extrémité raccordée au dispositif auxiliaire (4, 17),
dans lequel le gaz brut s'écoule à travers l'intérieur du désulfurant (3),
dans lequel le désulfurant (3) est raccordé de manière amovible au tuyau de matière première (11),
dans lequel une partie de piège (16) configurée pour accumuler une poudre de catalyseur du désulfurant (3) ou de la poussière, qui pénètre par la première extrémité du tuyau de matière première (11), est prévue en tant que partie du tuyau de matière première (11) entre sa première extrémité et son autre extrémité, et
dans lequel le tuyau de matière première (11) est configuré de manière à être en forme de J, de sorte que la partie de piège (16) est située dans la position la plus basse du tuyau de matière première (11).

2. Système de génération d'énergie à pile à combustible comprenant :
un désulfurant (3) configuré pour éliminer un composant soufré d'un gaz brut servant de matière première d'un gaz combustible contenant de l'hydrogène pour la génération d'énergie d'une pile à combustible, en tant que composant principal ;
un dispositif auxiliaire (4, 17) choisi parmi un détecteur de débit (17), un robinet d'arrêt (4) et un détecteur de pression, disposé en amont du désulfurant (3) ; et
un tuyau de matière première (11) ayant une extrémité raccordée au côté amont du désulfurant (3) et une autre extrémité raccordée au dispositif auxiliaire (4, 17),
dans lequel le gaz brut s'écoule à travers l'intérieur du désulfurant (3),
dans lequel le désulfurant (3) est raccordé de manière amovible au tuyau de matière première (11),
dans lequel une partie de piège (16) configurée pour accumuler une poudre de catalyseur du désulfurant (3) ou de la poussière, qui pénètre par la première extrémité du tuyau de matière première (11), est prévue en tant que partie du tuyau de matière première (11) entre sa première extrémité et son autre extrémité, et
le tuyau de matière première (11) comprend au moins une partie de boucle dans la direction verticale, telle que la partie de piège (16) sert de partie la plus basse de la partie de boucle.

3. Système de génération d'énergie à pile à combustible selon la revendication 1 ou 2,
dans lequel le côté amont du désulfurant (3) est situé au-dessous du côté aval du désulfurant (3).

4. Système de génération d'énergie à pile à combustible selon l'une quelconque des revendications 1 à 3,
dans lequel un côté qui se trouve en amont par rapport à la partie de piège est situé au-dessus de la partie de piège.

5. Système de génération d'énergie à pile à combustible selon l'une quelconque des revendications 1 à 4,
dans lequel le désulfurant (3) et le dispositif auxiliaire (4, 17) sont disposés à proximité l'un de l'autre de façon à être agencés côte à côte sensiblement dans la direction verticale.

6. Système de génération d'énergie à pile à combustible selon l'une quelconque des revendications 1, 3 ou 4,
dans lequel la position du côté aval du dispositif auxiliaire (4, 17) est située au-dessus de la position du côté amont du désulfurant (3).

7. Système de génération d'énergie à pile à combustible selon l'une quelconque des revendications 1 à 6,
dans lequel la partie de piège (16) possède un diamètre intérieur plus grand que le diamètre intérieur d'une partie du tuyau de matière première (11) à l'exception de la partie de piège.
